# EUROPEAN PATENT APPLICATION

(11) **EP 3 751 011 A1**
(43) Date of publication of application: **16.12.2020**
(21) Application number: 19020375.2
(22) Date of filing: 12.06.2019
(51) Int. Cl.: C21B 13/12, C21C 5/00, C21C 5/52

(54) **METHOD FOR OPERATING AN ELECTRIC ARC FURNACE**

(71) Applicant: Linde GmbH, 82049 Pullach (DE)
(72) Inventor: Kwaschny, Pascal, 22767 Hamburg (DE)
(74) Representative: Gellner, Bernd

(57) **Abstract**

The present invention relates to a method for operating an electric arc furnace (100), wherein an argon rich gas (133) is injected into the furnace (100) and wherein an electrode unit (110) comprising at least one electrode (111) of the furnace (100) is energised such that at least one electric arc (103) is generated.

## Description

The present invention relates to a method for operating an electric arc furnace as well as to an electric arc furnace and to an electrode for an electric arc furnace.

### Background of the invention

Electric arc furnaces are used in metallurgy for processing, particularly melting of metallic material like metal scrap or direct reduced iron (DRI, also referred to as sponge iron). An electrode of the electric arc furnace is usually made of graphite and is energised in order to produce an electric arc between the electrode and the metallic material. The electric arc furnace can comprise e.g. one electrode of that kind if direct current is used or three electrodes if alternating current is used.

In order to make electrically non-conducting air inside the furnace conducting, the molecular nitrogen N₂ of the air is usually dissociated into atomic nitrogen N, which is then ionised. By means of this conducting plasma the electric arc can be generated and can reach temperatures up to several thousand Kelvin such that the metallic material can be melted.

In a melting phase most of the metallic material inside the furnace is still in a solid state. In the course of this melting phase the electric arc drills holes into the solid metallic material. The electric arc can thus also melt material at the bottom of these holes and the radiation of the arc can also melt material at the sides of these holes. Thus, maximum energy yield and little losses of energy can be achieved. Once the metallic material is completely melted a flat bath is reached. In the course of a flat bath phase the electric arc is surrounded by a foaming slag in order to minimise energy losses. In the case of stainless steel, a foam slag is not used due to the required chemical analysis.

Operation of an electric arc furnace of that kind can involve high costs. With rising and varying energy prices, the costs for energising the electrodes can be a significant factor of the economic efficiency of the furnace. Further, wear of the graphite electrodes can also yield high costs and can make it necessary that the electrodes have to be replaced in certain intervals. Wear of the graphite electrodes usually comprises sublimation at the tip of the electrode and burn-off at its sides due to oxidation.

It is desirable to improve operation of an electric furnace, particularly to reduce the costs of the operation.

### Disclosure of the invention

According to the invention, a method for operating an electric arc furnace as well as an electric arc furnace and an electrode for an electric arc furnace with the features of the independent claims are proposed. Advantageous further developments form the subject matter of the dependent claims and of the subsequent description.

The electric arc furnace can particularly be used to process a metallic material, especially to melt a metallic material, e.g. metal scrap or direct reduced iron or sponge iron. Metallic material to be processed is particularly loaded into the furnace.

In the course of the present method, an argon rich gas is injected into the furnace, particularly a specific amount of the argon comprising gas. The term "argon rich gas" is particularly to be understood as a gas or a mixture of gases, wherein an amount of argon is larger than the amount of any other gas. In particular, the amount of argon in the argon rich gas is at least 50%, particularly at least 75%, more particularly at least 90%, more particularly at least 95%.

An electrode unit comprising at least one electrode of the furnace is energised such that at least one electric arc is generated, particularly between the at least one electrode and the metal material to be processed. For this purpose, the at least one electrode is expediently connected with a corresponding energy supply, e.g. by means of a transformer, a high current cable, etc. The at least one electrode is particularly made of graphite of a graphite material.

In correspondence with the present method, an electric arc furnace according to the present invention comprises an injection unit configured to inject an argon rich gas into the furnace and an electrode unit with at least one electrode configured to be energised such that at least one electric arc is generated. Advantageous and preferred embodiments of the method and the electric arc furnace according to the present invention shall arise from the present description in analogous manner.

By injecting the argon rich gas into the furnace according to the present invention operation of the electric arc furnace can significantly be improved and costs can particularly be reduced, as will be explained hereafter.

In common electric arc furnaces, first of all, the electrically non-conducting air inside the furnace has to be made conducting in order to generate an electric arc. For this purpose, molecular nitrogen N₂ is dissociated into atomic nitrogen N, a reaction for which 9.8eV of energy is needed per nitrogen molecule. The atomic nitrogen N is then ionised, for which 14.5eV of energy per nitrogen atom is necessary. Thus, per nitrogen molecule at least 24.3eV are necessary to create an electrically conducting plasma.

In contrast to nitrogen, argon is a one atomic gas, i.e. argon does not have to be dissociated. Thus, atomic argon only has to be ionised in order to create a conducting plasma. 15.8eV of energy are necessary to ionise one argon atom, i.e. only 65% of the energy in case of using nitrogen (N₂).

By injecting the argon rich gas into the furnace according to the present invention, argon expediently substitutes the air inside the furnace, especially in an area between the electrode unit and the metallic material. This area in which the electric arc is to be created is therefore enriched and particularly filled with argon. Thus, a smaller amount of energy has to be provided in order to create a plasma and thus to ignite the electric arc compared with common electric furnaces without the injection of the argon rich gas. Therefore, the electric energy necessary in order to generate and operate the electric arc and thus the costs for energising the electrode unit and for operating the furnace can be reduced.

The electrodes can therefore be energised with lower currents in order to create and operate the electric arc. Thus, wear of the electrodes, particularly sublimation at their tips can expediently be reduced. Further, by injecting the argon rich gas into the furnace, the atmosphere inside the furnace in an area surrounding the at least one electrode is expediently enriched with argon and oxygen is suppressed in this area.

Therefore, wear of the electrodes particularly in the form of burn-off at their sides due to oxidation can expediently be reduced. The intervals in which the electrodes need to be replaced can therefore be increased and costs can thus be reduced.

Furthermore, electric resistance of the electric arc is reduced such that the electric arc is created more efficient and more steady, which improves the operation of the furnace and increases its productivity.

Advantageously, the argon rich gas is injected into the furnace at a location at a tip of the at least one electrode of the electrode unit. Thus, this location at which the electric arc shall be generated can be enriched or filled with argon in order to improve and simplify ignition and operation of the electric arc.

Preferably, the argon rich gas is injected into the furnace by means of the electrode unit. The injection unit is preferably at least partially integrated into the electrode unit. The electrode unit is therefore enhanced to perform a further function additionally to creating the electric arc. Further, the argon rich gas can thus be injected at the location at the tip of the at least one electrode in order to enrich or fill the area where the eclectic arc is to be generated with argon.

According to a particularly preferred embodiment, the argon rich gas is injected into the furnace through a bore inside the at least one electrode of the electrode unit. Particularly advantageously, the injection unit comprises a bore inside the at least one electrode of the electrode unit configured to be connected with a gas supply for supplying the argon rich gas. Therefore, no additional elements have to be arranged inside in order to inject the argon rich gas. Further, by injecting the argon rich gas by means of the electrodes itself the argon rich gas can easily be injected at the location at the tip of the electrodes.

Each electrode particularly has a cylindrical shape with the bore extending along the entire length of the electrode in axial direction. Expediently, each electrode of the electrode unit comprises a bore of that kind. The corresponding gas supply especially comprises one ore several tanks or gas cylinders in which the argon rich gas is stored, usually under pressure (typically between 15 and 300 bar), as well as pipes from the tank(s) to the bores. These pipes can e.g. be attached to an end of the electrodes by means of covers which can expediently be connected to the electrodes. For example, the pipes can be arranged at a lift column and/or a support arm which are provided for fastening the electrodes.

The invention further relates to an electrode for an electric arc furnace of that kind, wherein the electrode is configured to be energised such that an electric arc is generated and wherein the electrode comprises a bore configured to be connected with a gas supply for supplying an argon rich gas. Advantageous and preferred embodiments of this electrode according to the present invention shall arise from the present description of the method and the electric arc furnace according to the present invention in analogous manner.

Advantageously, an amount of the argon rich gas injected into the furnace is controlled. This control can expediently be integrated into a control mechanism of the furnace and can for example be performed by a control unit for controlling operation of the furnace. Particularly, the amount of argon rich gas injected into the furnace can be controlled in order to improve the operation of the furnace and to increase its productivity.

Preferably the amount of the argon rich gas injected into the furnace is controlled in dependence of a state of the furnace and/or in dependence of a state of the at least one electric arc. The amount of argon rich gas is thus particularly controlled such that the electric arc is created and operated efficiently and steadily, thus improving the operation of the furnace and increasing its productivity. For example, if the electric arc becomes unstable, the amount of injected argon rich gas will expediently be increased to support and stabilise the electric arc.

Advantageously, the electrode unit comprises one electrode, especially when direct current is used to energise the electrode. Alternatively, the electrode unit preferably comprises three electrodes, particularly when alternating current is used to energise the electrodes, especially by means of a three-phase electric power source.

Preferably, argon is injected as the argon rich gas. In particular, argon with a purity of at least 90% is injected as the argon rich gas, particularly with a purity of at least 95%, more particularly with a purity of at least 99%. For example, argon 5.0 can be injected, i.e. argon with purity of 99.999%. Particularly, argon 6.0 can be injected with a purity of 99.9999%. Further, argon 7.0 can be injected, i.e. argon with a purity of 99.99999%.

It is however also possible to inject a mixture of gases as the argon rich gas, wherein an amount of argon in the gas mixture is at least 50 %, particularly at least 75%, more particularly at least 90%.

Further advantages and embodiments of the invention will become apparent from the description and the appended figures.

It should be noted that the previously mentioned features and the features to be further described in the following are usable not only in the respectively indicated combination, but also in further combinations or taken alone, without departing from the scope of the present invention.

In the drawings
- Fig. 1: schematically shows a preferred embodiment of an electric arc furnace according to the present invention in a sectional side view and
- Fig. 2: schematically shows a preferred embodiment of a method according to the present invention as a block diagram.

### Detailed description of the figures

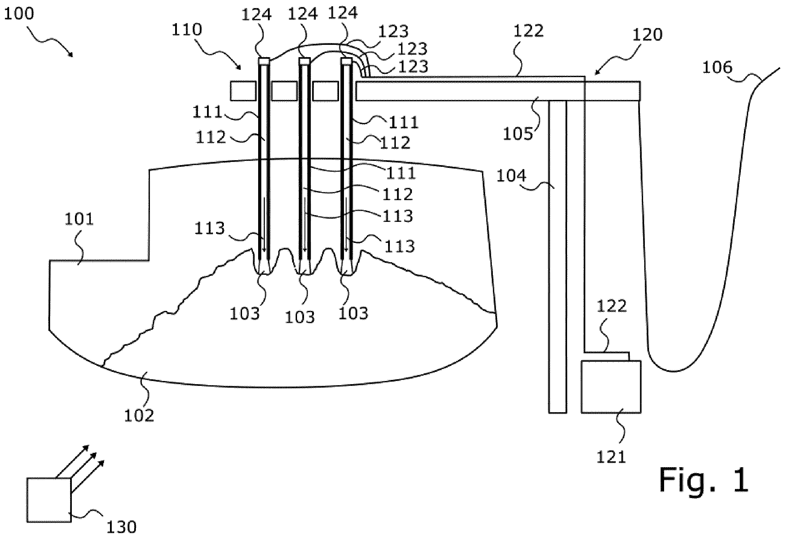

Fig. 1 schematically shows a preferred embodiment of an electric arc furnace 100 according to the present invention in a sectional side view.

The furnace 100 comprises a main body 101 in which a metallic material 102 to be processed can be loaded, e.g. metal scrap. Further, the furnace 100 comprises an electrode unit 110 with at least one electrode 111. In the present example, the electrode unit 110 comprises three electrodes 111, particularly of identical construction. A mechanical holding element is provided for holding the electrodes 111 in position comprising a lift column 104 and a support arm 105. The support arm 105 can further be used to energise the electrodes 111. For this purpose the support arm 105 can be connected with a high current cable 106. This cable 106 can be connected with further electric elements e.g. with a transformer and a power source, particularly a three-phase electric power source.

When the electrodes 111 are energised, electric arcs 103 can be created between the electrodes 111 and the metallic material 102. These electric arcs 103 can reach temperatures of several thousand Kelvin such that the metallic material 102 can be melted. Fig. 1 exemplarily shows a melting phase, during which most of the metallic material 102 is still in a solid state and in the course of which the electric arcs 103 drill holes into the solid metallic material 102.

Further, an injection unit is provided in order to inject an argon rich gas into the furnace 100. This injection unit is partially integrated into the electrode unit 110 in that each electrode 111 comprises a bore 112. Each electrode 111 has a cylindrical shape with the bore 112 extending along the entire length of the electrode 111 in axial direction.

Each bore 112 is connected with a gas supply 120 for supplying the argon rich gas. This gas supply 120 can comprise a corresponding gas tank 121 and a common pipe 122, which can e.g. be arranged at the lift column 104 and the support arm 105. From the common pipe 122 three individual pipes 123 branch off to the three electrodes 111. Although only one tank is exemplarily shown in Fig. 1 it is to be understood that an expedient number of tanks can be provided. For example, also a bundle of gas cylinders can be provided as the gas tank 121.

Particularly, each individual pipe 123 is connected with a cover 124, which is connected to the corresponding electrode 111 such that the argon rich gas can be conducted into the bore 112 of the corresponding electrode 111, as indicated by reference sign 113.

Thus, the argon rich gas 113 is injected into the furnace 100 through the electrodes 111 itself. When ejected out of the bores 112, argon rich gas 113 is therefore injected into the furnace 100 at location at the tip of the electrodes 111.

Preferably, argon is injected as the argon rich gas 113, preferably argon with a purity of at least 99.9%, e.g. argon 7.0 with a purity of 99.99999%. Argon is therefore injected into the furnace 100 in the area between the electrodes 111 and the metallic material 102, in which the electric arcs 103 shall be created. This area is thus enriched and particularly filled with argon. When the electrodes 111 are energised the argon in this area is thus ionised and an electrically conducting plasma is created such that the electric arcs 103 can be ignited.

Since argon is a one atomic gas it does not have to be dissociated. Argon thus only has to be ionised in order to create a conducting plasma. For the ionisation of argon 15.8eV of energy are necessary. In contrast to that, in a common electric arc furnace, into which no argon is injected, molecular nitrogen N₂ of air is usually ionised in order create plasma. However, first of all the molecular nitrogen N₂ has to be dissociated into atomic nitrogen N, which is afterwards ionised. For this dissociation 9.8eV of energy is needed and for the ionisation 14.5eV of energy is needed. Thus, in a common electric arc furnace, at least 24.3eV are necessary to create an electrically conducting plasma.

Therefore, in the present electric arc furnace 100 a smaller amount of energy has to be provided in order to create plasma compared to common electric arc furnaces into which no argon is injected. Electric energy to generate and operate the electric arcs 103, costs for energising the electrodes 111 and for operating the furnace 100 are reduced compared to common electric arc furnaces.

Further, since the electrodes 111 can therefore be energised with lower currents in order to create and operate the electric arcs 103, wear of the electrodes 111, particularly sublimation at their tips can expediently be reduced. Since the atmosphere inside the furnace 100 in an area surrounding the electrodes 111 is enriched with argon and oxygen is suppressed in this area, wear of the electrodes 111 in the form of burn-off at their sides due to oxidation can be reduced. Furthermore, since electric resistance of the electric arcs 103 is reduced the arcs 103 can be created and operated more efficient and steadier.

By means of the present invention, operation of the furnace 100 can therefore be improved, its productivity can be increased and costs can be reduced.

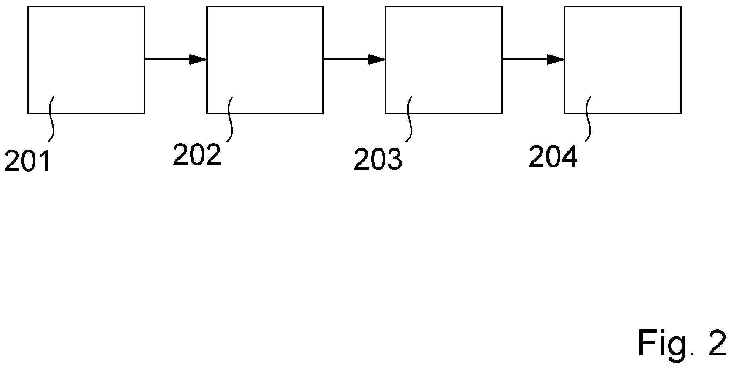

In order to further improve operation and productivity, the amount of the argon rich gas injected into the furnace is preferably controlled. For this purpose, a control unit 130 of the furnace is, in particular in terms of a computer program, configured to perform a preferred embodiment of a method according to the invention, which is shown in Fig. 2 as a block diagram.

In step 201 the metallic scrap is loaded into the furnace 100. In step 202, injection unit is activated and argon 113 is injected into the furnace. In step 203 the electrodes 111 are energised such that the plasma is created and that the electric arcs 103 can be ignited.

After the electric arcs 103 are generated, the amount of argon 113 injected into the furnace 100 is controlled in step 204, in particularly in dependence of a state of the furnace 100 and in dependence of a state of electric arcs 103.

For example, if the electric arcs 103 become unstable, the amount of injected argon 113 will be increased to support and stabilise the electric arcs 103. The electric arcs 103 can thus be created and operated efficiently and steadily, thus further improving the operation of the furnace 100 and increasing its productivity.

### Reference list

- 100: electric arc furnace
- 101: main body of the electric arc furnace
- 102: metallic material, metal scrap
- 103: electric arc
- 104: lift column
- 105: support arm
- 106: high current cable

- 110: electrode unit
- 111: electrode
- 112: bore
- 113: argon rich gas

- 120: gas supply
- 121: gas tank
- 122: common pipe
- 123: individual pipe
- 124: cover

- 130: control unit

- 201: method step
- 202: method step
- 203: method step
- 204: method step

## Claims

1. A method for operating an electric arc furnace (100), wherein an argon rich gas (133) is injected (202) into the furnace (100) and wherein an electrode unit (110) comprising at least one electrode (111) of the furnace (100) is energised (203) such that at least one electric arc (103) is generated.

2. The method according to claim 1, wherein the argon rich gas (113) is injected into the furnace (100) at a location at a tip of the at least one electrode (111) of the electrode unit (110).

3. The method according to claim 1 or 2, wherein the argon rich gas (113) is injected into the furnace (100) by means of the electrode unit (110).

4. The method according to claim 3, wherein the argon rich gas (113) is injected into the furnace (100) through a bore (112) inside the at least one electrode (111) of the electrode unit (110).

5. The method according to any one of the preceding claims, wherein an amount of the argon rich gas (113) injected into the furnace (100) is controlled (204).

6. The method according to claim 5, wherein the amount of the argon rich gas (113) injected into the furnace (100) is controlled (204) in dependence of a state of the furnace (100) and/or in dependence of a state of the at least one electric arc (103).

7. The method according to any one of the preceding claims, wherein argon is injected as the argon rich gas (113).

8. An electric arc furnace (100) comprising an injection unit (112, 120) configured to inject an argon rich gas (113) into the furnace (100), an electrode unit (110) comprising at least one electrode (111) configured to be energised such that at least one electric arc (103) is generated.

9. The electric arc furnace (100) according to claim 8, wherein the injection unit (112, 120) is at least partially integrated into the electrode unit (110).

10. The electric arc furnace (100) according to claim 9, wherein the injection unit comprises a bore (112) inside the at least one electrode (111) of the electrode unit (110) configured to be connected with a gas supply (120) for supplying the argon rich gas (113).

11. The electric arc furnace (100) according to any one of the claims 8 to 10, wherein the electrode unit (110) comprises one electrode or three electrodes (111).

12. An electrode (111) for an electric arc furnace (100) configured to be energised such that an electric arc (103) is generated, comprising a bore (112) configured to be connected with a gas supply (120) for supplying an argon rich gas.
